# EUROPEAN PATENT SPECIFICATION

(11) **EP 1 832 174 B1**
(45) Date of publication and mention of the grant of the patent: **17.07.2013**
(21) Application number: 07103726.1
(22) Date of filing: 08.03.2007
(51) Int. Cl.: A22B 5/00

(54) **Device and method for performing a treatment process on a carcass**
Vorrichtung und Verfahren zur Behandlung eines Kadavers
Dispositif et procédé pour effectuer un processus de traitement sur une carcasse

(30) Priority: 10.03.2006 DK 200600346
(43) Date of publication of application: 12.09.2007
(73) Proprietor: Teknologisk Institut, 2630 Taastrup (DK)
(72) Inventor: Hansen, Niels Worsøe, 4320, Lejre (DK)
(74) Representative: Rasmussen, Torben Ravn

(56) References cited:
- EP-A2- 1 527 689
- WO-A-2005/110094
- BE-A4- 1 007 533
- US-A- 3 657 771

## Description

### Technical field

This invention concerns a device for performing a treatment process on a foreleg of a carcass, and comprising a gripping mechanism with parts that can encircle and grip the foreleg, where the said gripping mechanism is designed to detect an anatomical part on the foreleg, and a tool arrangement designed to perform the treatment process on the foreleg at a predetermined distance from anatomical part detected by the gripping mechanism. It also concerns a method for performing a treatment process on a foreleg of a carcass and the use of the said device.

### Known technique

Carcasses on a slaughtering line can consist of two halves of a single carcass, which can be hung from a gambrel or hooks. The carcass halves can hang joined at the head, the snout alone, a piece of fat on the neck, or they can be completely separated. The carcass halves can also be transported in a flat position on a conveyor belt. This invention concerns handling of the carcasses before or after they are cut in half and, therefore, both full and half carcasse, as described above.

When a carcass is to be treated on a slaughtering line, sometimes the position of an anatomical part of the carcass is measured before the treatment begins. Such a measurement enables calculation of the distance between the hanging position and the positions where treatment processes are to take place, such as classification using probes, branding, cutting, clipping, etc. Such a measurement of the position of an anatomical part of a carcass is not sufficient for making all treatment processes, as carcasses vary too much, and that variation increases the further away the processing position is from the point of measurement.

It has also proven to be very problematic to perform accurate treatment processes of protruding parts such as forelegs, hind legs, ears, etc. This is because, typically, 360-400 animals an hour are butchered on a slaughtering line, corresponding to rate of about 9-10 seconds from the time a carcass arrives at a treatment station until the next carcass arrives. At that rate, particularly some movements of the protruding parts are not controlled, because of the inertia of the rapid movement owing to acceleration and deceleration between one treatment station to the next.

It is particularly problematic in treatment processes where cutting or clipping needs to be very precise, e.g., at joints. Such treatment processeses that require high precision are therefore often done manually on the basis of manual capture and immobilizing the carcass, as well as detection prior to the procedure in question.

The manual detection of the position for the treatment most often involves an operator assessing or "feeling" for the position of a particular anatomical part.

In connection with a slaughtering line, manual processes are often undesirable, as the speed at which the carcasses on the slaughtering line are treated is very high. It can be straining to perform monotonous, repetitive work on slaughtering lines at a high speed.

A particular treatment process that is automatically/mechanically very difficult to perform using the currently known methods of measuring the position of an anatomical position on a carcass is cutting a toe on the foreleg of a carcass. The anatomical part in this case can be a malleolus. The clipping position, which is at the joint between the shank bone and the middle joint, can be found based on the malleolus. Clipping is performed at the joint for reason of proportional partitioning in relation to suppliers and customers. Detecting the malleolus can be very difficult, as its position can vary greatly relative to the tip of the toe and the body, making accurate clipping unlikely.

It is furthermore very important for constructions for performing slaughter line processes that these can be washed from treatment of one carcass to the next for reasons of hygiene. It is also important that such devices be simple and robust, in order to facilitate maintenance and the replacement of parts. Specifically in humid environments with lots of vibration and sources of contamination, it is difficult to use advanced measuring systems such as photocells, image treatment, etc., to perform accurate measurements prior to specific precise treatment processes.

According to the European Patent No. 1527689, a gripping device is disclosed, which is arranged to hold a foreleg, in addition to a sensor device, which is arranged to detect an anatomical part of the foreleg, and thirdly a tool device to perform a treatment of the foreleg at a predetermined distance from the anatomical part. This device allows a detection of a mechanical detection of an anatomical part of a foreleg, as the sensor device is moved along the surface of the carcass and therefore registers the character of the surface. Thus, according to prior art this detection is made in a plain and simple way and with a simple mechanical construction, which can be implemented in connection with a slaughtering line either as a separate device or on an existing device, and therefore fitted in to follow the speed at which the carcass is treated. A malleolus of a foreleg may, however, be difficult to detect, as in some cases the malleous is not very distinct, and hence there is a risk of erroneous clipping when using this prior art device.

Another prior art device is described in WO 02 /062146 A1, which relates to a device and method for cutting off hind feet of carcasses. The device comprises a gripping mechanism for gripping the hind leg and moving the gripping mechanism to the heel joint to perform cutting off of the hind feet. This device is, however, not suited for performing treatment process on a foreleg, as the anatomic characteristics of the foreleg, contrary to the hind leg, are indistinct.

US3657771 also relates to the processing of hind legs and discloses a device comprises a clamping station for fixating the foot as well as a sensing station for detecting an anatomical part on the leg.

The purpose of this invention is to present a solution that can detect these difficult anatomical parts with precision and immediately thereafter perform the difficult treatment processes so as to exclude manual operations fully or partly.

To fullfil this purpose, the device according to the invention comprises a tool arrangement designed to perform the treatment process on the foreleg at a predetermined distance from the anatomical part detected by the gripping mechanism.

The device further comprises a sensor mechanism designed to detect the foreleg's free end. Such a sensor mechanism can ensure that the gripping mechanism grips the foreleg at a suitable distance from the foreleg's free end, thereby reduce the risk of erroneous cutting of the foretoe, for example. By detecting the free end of the foreleg, a very reliable detection can be achieved.

Another purpose is to produce a solution that is uncomplicated in construction such that it facilitates cleaning and maintenance.

Yet another purpose is to present a solution for capturing and detecting such difficult anatomical parts and immediately thereafter performing the complicated treatment processes.

In this way, an anatomical part of a foreleg can be detected mechanically, because the gripping mechanism immobilizes the foreleg and detects the anatomical part. Thus, detection is simple and easy thanks to a simple mechanical construction that can be integrated with a slaughtering line both in the form of a stand-alone device or on an existing system and can thereby be adapted to operate at the speed at which the carcasses are treated.

According to the present invention a construction is presented that is easy to clean, maintain and repair and that is not sensitive to contamination, which is particularly practical, especially for a slaughtering line where many carcasses are treated per hour.

When the device is used on a slaughtering line according to the present invention, the gripping mechanism comes into contact with the foreleg of a carcass, whereby the mechanism grips the foreleg. The gripping mechanism grips the foreleg and detects the anatomical part. Once the anatomical part has been detected, the tool arrangement starts, such that the treatment is carried out on the basis of the detection, e.g., at a predetermined distance from the anatomical part.

The term "anatomical part", as used herein, refers to a part of a carcass, such as a malleolus. An anatomical part can also comprise other projections or hollows of the carcass.

### Summary of the invention

The device comprises a sensor mechanism set up to detect the foreleg's free ends. The term "foreleg's free ends" used herein refers to that end of the foreleg that is not attached to the carcass corpus. In other words, it is the end where the foretoes are located. Such a sensor mechanism can ensure that the gripping mechanism grips the foreleg at a suitable distance from the foreleg's free end.

In a preferred embodiment, according to this invention, the device comprises a moving structure. The moving structure can be set to move at least the gripping mechanism primarily along the length of the foreleg for detection of the anatomical part. The moving structure moves the gripping mechanism so that it can register the character of the foreleg's surface. By moving the gripping mechanism instead of the foreleg, the foreleg stays stationary and does not depart significantly from the carcass's path of movement on a slaughtering line.

In another preferred embodiment, the gripping mechanism can comprise two parts that grip and press against the foreleg so that these parts cannot pass the anatomical part after it has been detected through the gripping arrangement's movement primarily along the length of the foreleg. This method ensures that the gripping mechanism does not pass the anatomical part after it has been detected. Furthermore, the above-mentioned parts allow for the foreleg to be pulled along by the gripping mechanism as it moves along the length of the foreleg. This ensures that the gripping mechanism, after detection of the anatomical part, does not move away from or past the part.

Also the tool arrangement can be placed at a fixed distance from the gripping mechanism. This ensures that the tool arrangement always performs the treatment at a fixed distance from the gripping mechanism and, thus, at a fixed distance from the anatomical part detected by the gripping mechanism.

Preferably, the device can also comprise a counter grip mechanism that can be set up to immobilize at least one part of the foreleg before, during and/or after the treatment. Such a counter grip mechanism can ensure, for instance, that the foreleg remains in the correct position during the treatment. The counter grip mechanism can also ensure that a part cut off of the foreleg, e.g., a foretoe, is retained in the mechanism and is released only when appropriate, e.g., by lifting or shifting the counter grip mechanism. This ensures that the clipped part is firmly in place and that it will not be dropped in an undesirable place.

This invention also concerns a method for performing a treatment on a foreleg of a carcass, whereby the foreleg is gripped and an anatomical part on the foreleg is detected with the help of a gripping mechanism and for performing, with the help of a tool arrangement, a treatment on the foreleg at a predetermined distance from the anatomical part detected by the gripping mechanism. This ensures accurate detection and an accurate treatment on a foreleg using the tool arrangement.

Further, the method can involve parts of the gripping mechanism pressing in against the foreleg, while the gripping mechanism moves towards the foreleg's free end primarily along the length of the foreleg until the gripping mechanism detects the anatomical part, whereon the tool arrangement performs the treatment on the foreleg. In other words, the gripping mechanism grips the foreleg with a given force and, at minimum, moves along the foreleg until detection occurs. After detection, the gripping mechanism may continue moving toward the foreleg's free end.

Moreover, the method can involve parts of the gripping mechanism pressing against the foreleg in such a manner that these parts cannot pass the anatomical part after it has been detected via the gripping arrangement's movement primarily over the length of the foreleg. This way, the gripping mechanism does not pass the anatomical part after detection. Instead, the gripping mechanism stops at the anatomical part, even though the movement continues for a short distance and thereby ensures that the treatment is performed at the correct distance from the anatomical part.

The method can also involve a sensor mechanism during a step before activation of the gripping mechanism, detecting the foreleg's free end, where the gripping mechanism's start position and/or stretch of movement can be adjusted in relation to the detection. In this way, either the gripping mechanism's start position, the stretch that the gripping mechanism is to travel or both of these parameters can be adjusted in relation to detection of the foreleg's free ends. This is beneficial, for instance, for ensuring that the gripping mechanism does not start by immobilizing the foreleg an inappropriate place on the foreleg, e.g., too close to the carcass corpus.

Finally, this invention also concerns a device, as described above, for performing a treatment on a foreleg of a carcass.

A carcass can refer herein to both a whole carcass and a half carcass (carcass half), such as a hog carcass half. When the parts of a (hog) carcass half are to be subjected to a treatment, according to this invention, there may be two devices set up on the slaughtering line for treatment of the forelegs.

### Brief description of the drawings

The invention is described in detail below, with reference to special preferred embodiments and the drawing, where
Fig. 1 in perspective shows a preferred embodiment of a device according to this invention, and
Fig. 2 shows the same preferred embodiment of the device according to this invention from another perspective.

All figures are schematic and not necessarily drawn to scale. They show only those parts that are necessary to clarify the invention, while the other parts are omitted or only roughly sketched. The same reference number is used in all figures where identical or equivalent details are shown.

### Detailed description of preferred embodiments

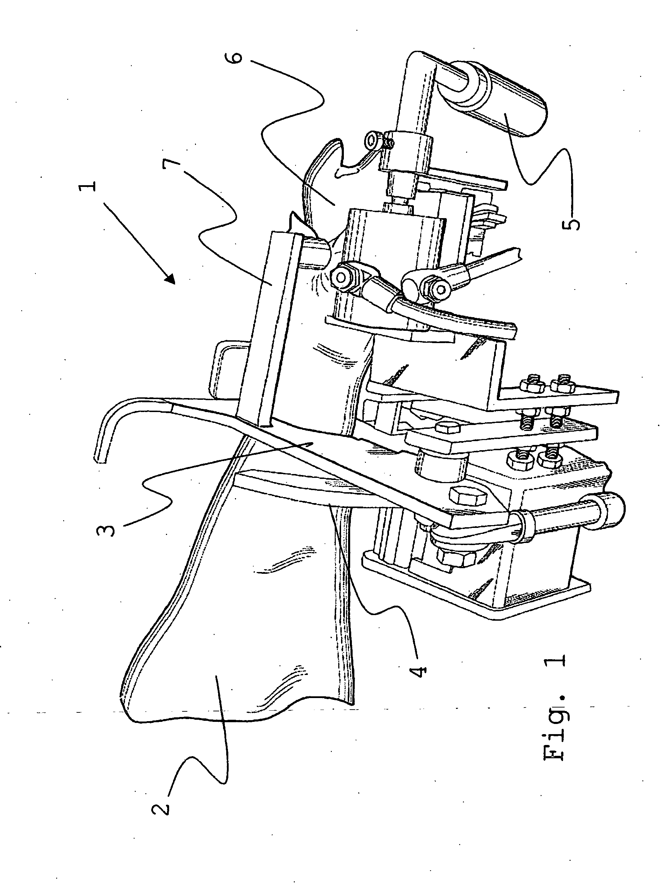

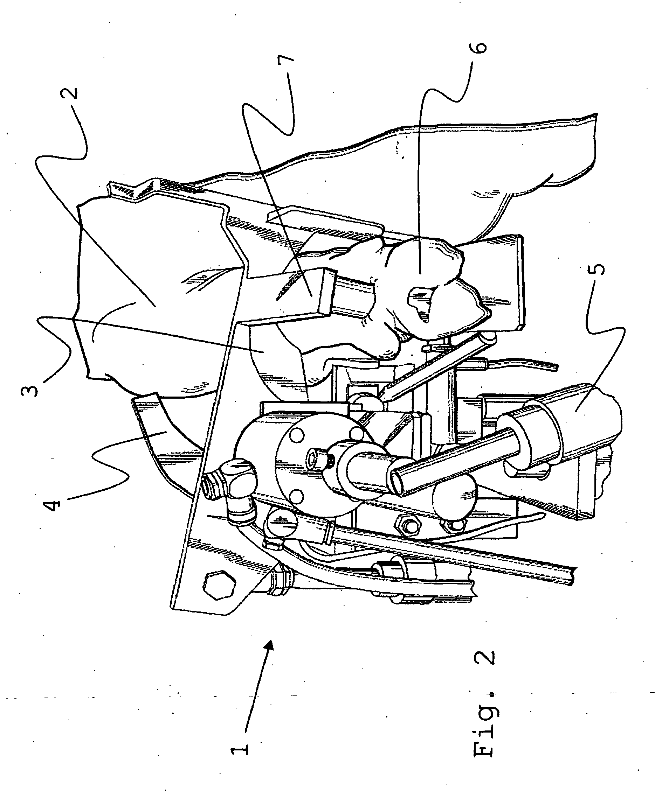

Figures 1 and 2 show, from two different perspectives, a preferred embodiment of a device 1 according to the invention, comprising a gripping mechanism 3, a too mechanism 4, a sensor mechanism 5 and a counter grip mechanism 7. The figures also show a foreleg 2 of carcass and the foreleg's free end 6. The device 1 is shown with the foreleg 2 firmly in the device 1.

The device 1 is used when a hanging carcass arrives and is affixed in a fixture, whereby a foreleg 2 is placed in the device 1, specifically in the bottom portion of an open gripping device 3, which primarily can move horizontally along the length of the foreleg. The sensor mechanism 5 then detects the foreleg's free end 6. In figures 1 and 2, the sensor mechanism 5 is illustrated as a roll that is mounted on a revolving cylinder. The roll is placed on the surface of the foreleg 2. Next, the entire device 1, including sensor mechanism 5, moves towards the foreleg's free end 6, without the foreleg 2 moving significantly. When the roll moves past the foreleg's free end 6, it swings, due to the force of the rotating cylinder, down to a position below the foreleg. This activates a sensor that registers that the device has reached the free end 6. This can happen by, for instance, a detector (inductive sensor) activating when the roll swings down. This can happen by, for instance, a plate or flange that is connected to the roll swinging down in front of a detector. In the figures, the roll is shown in a position it reaches after the roll has passed the foreleg's free end 6 and has therefore swung downward. Sensor mechanism 5 can be any adequate type. For instance, the sensor mechanism 5 could involve photocells or other light-based sensor systems, such as laser systems or the like.

When the sensor mechanism 5 has detected the foreleg's free end 6, the gripping mechanism 3 is activated. The gripping mechanism 3 can, as shown in the figures, comprise a metal plate with a bridge-like cutting, but may also have other preferable embodiments. The gripping mechanism 3 can also comprise a support plate for the leg, as well as parts that can grip and, perhaps, press against the sides of the foreleg 2. On activation, the metal plate of the gripping mechanism 3 comes into contact with the foreleg 2 and is pressed against it with a predetermined force. At the same time, the device 1 continues to move along the foreleg 2 towards the foreleg's free end 6. When the gripping mechanism 3 has reached the position on the foreleg 2 where the anatomical part is located, e.g., at a malleolus, the gripping mechanism 3 cannot pass it, but, instead, "locks" onto the part. Therefore, the gripping mechanism 3 pushes the anatomical part and, consequently, the foreleg 2, which then moves together with the device 1. The movement of the device 1 stops after having moved a preset distance from activation of the gripping mechanism. Optionally, gripping mechanism 3 can be activated, i.e., brought into contact with the foreleg 2 before the sensor mechanism 5 has detected the foreleg's free end 6.

When the device 1 has stopped moving, the gripping mechanism 3 is situated at the anatomical part. The tool arrangement 4 can thus perform the treatment at a given distance from the gripping mechanism 3 and thereby also at a given distance from the anatomical part. In the figures, the tool arrangement 4 is shown as being at a fixed distance from the gripping mechanism 3, but the tool arrangement 4 can be adjusted in other ways. The tool arrangement 4 is shown as being a scissors, the tool arrangement 4 can also be a knife, saw or the like. In the tool arrangement's 4 treatment process, the foreleg 2 is clipped and cut in half, and the foretoe and foreleg's free end 6 is released.

The figures also show a counter grip mechanism 7, which, optionally, can be omitted, but which serves to immobilizes the part of the foreleg 2 that is being clipped, before, during and after clipping. In this way, the clipped part can be held in the device 1 even after clipping and released when appropriate.

Thus, according to the described preferred embodiment of the tool arrangement of device 1, the anatomical part is detected by the gripping device 3 moving along the length of the foreleg 2 until it reaches the anatomical part. Next, the foreleg 2 moves with the device 1, and the gripping device 3 cannot pass the anatomical part. The gripping mechanism 3 always ends up beside the anatomical part after the device 1 has stopped moving.

The total distance the device 1 moves can vary, as needed. For instance, for forelegs 2 of varying lengths and sizes, it may be favourable to change the course of the movement. Likewise, there may be a variation in the positioning of the forelegs 2 in the device 1, which may justify changing the course of the movement. What is more, the start position of the gripping mechanism 3, i.e., the location on the foreleg 2 where the gripping mechanism 3 first comes into contact with the foreleg 2, can vary. Both the course of movement and the start position may be adjusted in relation to the detection of the foreleg's free end 6. For example, it may be wise not to bring the gripping mechanism 3 into contact with the foreleg 2 too far from its free end 6. A favourable total stretch of movement is from approx. 100 mm to approx. 300 mm. A more favourable total stretch of movement is from approx. 150 mm to approx. 200 mm.

Metal is an ideal material from which to make the gripping mechanism 3, tool arrangement 4 and counter grip mechanism 7. However, other materials such as hard plastic may also be used.

Using a device 1 such as the one mentioned above ensures accurate detection and an accurate treatment process on a foreleg 2 of a carcass.

The device 1 as described in the invention is appropriately incorporated into a fixture that immobilizes the carcasses in connection with this and/or another slaughtering process. See, e.g., Danish patent application PA 2003 01654 (the Danish Meat Research Institute). The gripping mechanism 3 can move along the bone with the help of an appropriate drive arrangement. See, e.g., Danish patent application PA 2003 01619 (the Danish Meat Research Institute).

Although the invention above is described in connection with preferred embodiments of the invention, it is clear to a professional, that multiple modifications and improvements are possible without deviating from the invention's novelty, as it is defined in the following claims.

## Claims

1. Device (1) for performing a treatment process on a foreleg (2), comprising a gripping mechanism (3) with parts that can encircle and grip the foreleg (2), where the gripping mechanism (3) is designed to detect an anatomical part on the foreleg (2), and a tool arrangement (4) designed to perform the treatment process on the foreleg (2) at a predetermined distance from the anatomical part detected by the gripping mechanism (3), wherein said device comprises a sensor mechanism (5) designed to detect the foreleg's free end (6), **characterised in that** the foreleg protrudes from a carcass and **in that** the gripping mechanism (3) is designed to detect an anatomical part in the form of a projection or hollow on the foreleg (2).

2. Device (1) according to claim 1 whereby the device (1) comprises a moving structure that is designed to move at least the gripping mechanism (3) primarily along the length of the foreleg (2) for detecting the anatomical part.

3. Device (1) according to claim 2, wherein the gripping mechanism (3) comprises two parts that grip and press against the foreleg (2) so that these parts cannot pass the anatomical part after said part has been detected by the gripping mechanism's (3) movement primarily along the length of the foreleg (2).

4. Device (1) according to any of the above claims wherein the tool arrangement (4) is arranged at a fixed distance from the gripping mechanism (3).

5. Device (1) according to any of the above claims wherein the device (1) further comprises a counter grip mechanism (7) designed to immobilize at least one part of the foreleg (2) before, during and/or after the treatment process.

6. Method for performing a treatment process on a foreleg, comprising the steps according to which the foreleg (2) is immobilized and an anatomical part is detected with the help of a gripping mechanism (3) and, with the help of a tool arrangement (4), a treatment process is performed on the foreleg (2) at a predetermined distance from the anatomical part detected by the gripping mechanism (3), wherein a sensor mechanism, in an intermediate step performed before activation of the gripping mechanism (3), detects the foreleg's free end (6), **characterised in that** the foreleg protudes from a carcass and **in that** the anatomical part is in the form of a projection or hollow on the foreleg (2).

7. Method according to claim 6 wherein the gripping mechanism (3) is moved primarily along the length of the foreleg (2) for detecting the anatomical part.

8. Method according to claim 7 wherein the gripping mechanism's (3) start position and/or stretch of movement can be adjusted in relation to the detection.

9. Method according to any of claims 6-8 wherein parts of the gripping mechanism (3) are pressed against the foreleg (2), while the gripping mechanism (3) moves towards the foreleg's free end (6) primarily along the length of the foreleg (2) at least until the gripping mechanism (3) detects the anatomical part, whereon the tool arrangement (4) performs the treatment process on the foreleg (2).

10. Method according to any of claims 6-9 wherein parts of the gripping mechanism (3) are pressed against the foreleg (2) in such a manner that these parts cannot pass the anatomical part after it has been detected via the gripping mechanism's (3) movement primarily along the length of the foreleg (2).

11. Use of a device (1) according to claims 1-5 for performing a treatment process on a foreleg (2) of a carcass.

## Patentansprüche

1. Einrichtung (1) zum Durchführen eines Behandlungsprozesses an einem Vorderbein (2), umfassend einen Greifmechanismus (3) mit Teilen, die das Vorderbein (2) umgeben und greifen können, wobei der Greifmechanismus (3) ausgebildet ist, um einen anatomischen Teil an dem Vorderbein (2) zu erkennen, und eine Werkzeuganordnung (4), die konstruiert ist, um den Behandlungsprozess an dem Vorderbein (2) in einem vorbestimmten Abstand von dem anatomischen Teil, der von dem Greifmechanismus (3) erkannt wird, durchzuführen wobei die Einrichtung einen Sensormechanismus (5) umfasst, der konstruiert ist, um das freie Ende (6) des Vorderbeins zu erkennen, **dadurch gekennzeichnet, dass** das Vorderbein von einem Schlachttierkörper vorsteht und dass der Greifmechanismus (3) konstruiert ist, um einen anatomischen Teil in der Form eines Vorsprungs oder einer Vertiefung an dem Vorderbein (2) zu erkennen.

2. Einrichtung (1) nach Anspruch 1, wobei die Einrichtung (1) eine bewegliche Struktur umfasst, die konstruiert ist, um mindestens den Greifmechanismus (3) vornehmlich entlang der Länge des Vorderbeins (2) zu bewegen, um den anatomischen Teil zu erkennen.

3. Einrichtung (1) nach Anspruch 2, wobei der Greifmechanismus (3) zwei Teile umfasst, die das Vorderbein (2) greifen und dagegen drücken, so dass diese Teile den anatomischen Teil nicht passieren können, nachdem der Teil durch die Bewegung des Greifmechanismus (3) vornehmlich entlang der Länge des Vorderbeins (2) erkannt wurde.

4. Einrichtung (1) nach einem der obigen Ansprüche, wobei die Werkzeuganordnung (4) in einem festen Abstand von dem Greifmechanismus (3) angeordnet ist.

5. Einrichtung (1) nach einem der obigen Ansprüche, wobei die Einrichtung (1) weiterhin einen Gegengreifmechanismus (7) umfasst, der konstruiert ist, um mindestens einen Teil des Vorderbeins (2) vor, während und/oder nach dem Behandlungsprozess zu immobilisieren.

6. Verfahren zum Durchführen eines Behandlungsprozesses an einem Vorderbein, umfassend die Schritte, gemäß denen das Vorderbein (2) immobilisiert wird und mit Hilfe eines Greifmechanismus (3) ein anatomischer Teil erkannt wird und mit Hilfe einer Werkzeuganordnung (4) in einem vorbestimmten Abstand von dem anatomischen Teil, das von dem Greifmechanismus (3) erkannt wird, ein Behandlungsprozess an dem Vorderbein (2) durchgeführt wird, wobei ein Sensormechanismus in einem Zwischenschritt, der vor der Aktivierung des Greifmechanismus (3) durchgeführt wird, das freie Ende (6) des Vorderbeins erkennt, **dadurch gekennzeichnet, dass** das Vorderbein von einem Schlachttierkörper vorsteht und dass der anatomische Teil in der Form eines Vorsprungs oder einer Vertiefung an dem Vorderbein (2) ist.

7. Verfahren nach Anspruch 6, wobei der Greifmechanismus (3) vornehmlich entlang der Länge des Vorderbeins (2) bewegt wird, um den anatomischen Teil zu erkennen.

8. Verfahren nach Anspruch 7, wobei die Startposition und/oder Bewegungsstrecke des Greifmechanismus (3) im Verhältnis zu der Erkennung eingestellt werden kann.

9. Verfahren nach einem der Ansprüche 6-8, wobei Teile des Greifmechanismus (3) gegen das Vorderbein (2) gedrückt werden, während sich der Greifmechanismus (3) vornehmlich entlang der Länge des Vorderbeins (2) auf das freie Ende (6) des Vorderbeins zu bewegt, und zwar mindestens, bis der Greifmechanismus (3) das anatomische Teil erkennt, woraufhin die Werkzeuganordnung (4) den Behandlungsprozess an dem Vorderbein (2) durchführt.

10. Verfahren nach einem der Ansprüche 6-9, wobei Teile des Greifmechanismus (3) auf eine solche Weise gegen das Vorderbein (2) gedrückt werden, dass diese Teile den anatomischen Teil nicht passieren können, nachdem er durch die Bewegung des Greifmechanismus (3) vornehmlich entlang der Länge des Vorderbeins (2) erkannt wurde.

11. Verwendung einer Einrichtung (1) nach den Ansprüchen 1-5 zum Durchführen eines Behandlungsprozesses an einem Vorderbein (2) eines Schlachttierkörpers.

## Revendications

1. Dispositif (1) destiné à effectuer un processus de traitement sur une patte antérieure (2), comprenant un mécanisme de préhension (3) avec des parties qui peuvent encercler et saisir la patte antérieure (2), dans lequel le mécanisme de préhension (3) est conçu pour détecter une partie anatomique sur la patte antérieure (2), et un agencement d'outillage (4) conçu pour effectuer le processus de traitement sur la patte antérieure (2) à une distance prédéterminée de la partie anatomique détectée par le mécanisme de préhension (3), dans lequel ledit dispositif comprend un mécanisme de capteur (5) conçu pour détecter l'extrémité libre (6) de la patte antérieure,
**caractérisé en ce que** la patte antérieure fait saillie d'une carcasse et **en ce que** le mécanisme de préhension (3) est conçu pour détecter une partie anatomique sous la forme d'une protubérance ou d'un creux sur la patte antérieure (2).

2. Dispositif (1) selon la revendication 1, dans lequel le dispositif (1) comprenant une structure mobile qui est conçue pour déplacer au moins le mécanisme de préhension (3) essentiellement le long de la longueur de la patte antérieure (2) pour détecter la partie anatomique.

3. Dispositif (1) selon la revendication 2, dans lequel le mécanisme de préhension (3) comprend deux parties qui saisissent la patte antérieure (2) et se pressent contre celle-ci de sorte que ces parties ne puissent pas dépasser la partie anatomique après que ladite partie a été détectée par le déplacement du mécanisme de préhension (3) essentiellement le long de la longueur de la patte antérieure (2).

4. Dispositif (1) selon l'une quelconque des revendications ci-dessus, dans lequel l'agencement d'outillage (4) est agencé à une distance fixe du mécanisme de préhension (3).

5. Dispositif (1) selon l'une quelconque des revendications ci-dessus, le dispositif (1) comprenant en outre un mécanisme de contre-préhension (7) conçu pour immobiliser au moins une partie de la patte antérieure (2) avant, pendant et/ou après le processus de traitement.

6. Procédé destiné à appliquer un processus de traitement à une patte antérieure, comprenant les étapes selon lesquelles la patte antérieure (2) est immobilisée et une partie anatomique est détectée à l'aide d'un mécanisme de préhension (3) et, à l'aide d'un agencement d'outillage (4), un processus de traitement est effectué sur la patte antérieure (2) à une distance prédéterminée de la partie anatomique détectée par le mécanisme de préhension (3), dans lequel un mécanisme de capteur, à une étape intermédiaire effectuée avant l'activation du mécanisme de préhension (3), détecte l'extrémité libre de la patte antérieure (6), **caractérisé en ce que** la patte antérieure fait saillie d'une carcasse et **en ce que** la partie anatomique est sous la forme d'une protubérance ou d'un creux sur la patte antérieure (2).

7. Procédé selon la revendication 6, dans lequel le mécanisme de préhension (3) est déplacé essentiellement le long de la longueur de la patte antérieure (2) pour détecter la partie anatomique.

8. Procédé selon la revendication 7, dans lequel la position de départ du mécanisme de préhension (3) et/ou l'étendue du déplacement peuvent être ajustées en relation avec la détection.

9. Procédé selon l'une quelconque des revendications 6 à 8, dans lequel des parties du mécanisme de préhension (3) sont pressées contre la patte antérieure (2), alors que le mécanisme de préhension (3) se déplace vers l'extrémité libre de la patte antérieure (6) essentiellement le long de la longueur de la patte antérieure (2) au moins jusqu'à ce que le mécanisme de préhension (3) détecte la partie anatomique, sur quoi l'agencement d'outillage (4) effectue le processus de traitement sur la patte antérieure (2).

10. Procédé selon l'une quelconque des revendications 6 à 9, dans lequel des parties du mécanisme de préhension (3) sont pressées contre la patte antérieure (2) d'une manière telle que ces parties ne puissent pas dépasser la partie anatomique après qu'elle a été détectée par le déplacement du mécanisme de préhension (3) essentiellement le long de la longueur de la patte antérieure (2).

11. Utilisation d'un dispositif (1) selon les revendications 1 à 5, pour effectuer un processus de traitement sur une patte antérieure (2) d'une carcasse.
